## Europäisches Patentamt
## European Patent Office
## Office européen des brevets

(19)

(11) Publication number: **0 194 720**
**A2**

(12) **EUROPEAN PATENT APPLICATION**

(21) Application number: **86200348.0**

(22) Date of filing: **07.03.86**

(51) Int. Cl.⁴: **H 04 N 7/08**
**//H04N11/08**

(30) Priority: **12.03.85 GB 8506322**

(43) Date of publication of application:
**17.09.86 Bulletin 86/38**

(84) Designated Contracting States:
**DE FR GB IT NL SE**

(71) Applicant: **PHILIPS ELECTRONIC AND ASSOCIATED INDUSTRIES LIMITED**
**Arundel Great Court 8 Arundel Street**
**London WC2R 3DT(GB)**

(84) Designated Contracting States:
**GB**

(71) Applicant: **N.V. Philips' Gloeilampenfabrieken**
**Groenewoudseweg 1**
**NL-5621 BA Eindhoven(NL)**

(84) Designated Contracting States:
**DE FR IT NL SE**

(72) Inventor: **Kirkland, Robert Neil**
**Mullard Limited New Road**
**Mitcham Surrey CR4 4XY(GB)**

(74) Representative: **Cole, Bernard Victor et al,**
**Philips Electronic and Associated Industries Limited**
**Patent Department Mullard House Torrington Place**
**London WC1E 7HD(GB)**

(54) **Handling data packets.**

(57) In an arrangement for handling packets of data, data is serially applied to a data formatting device (2) and stored in a RAM (3) from where it is applied on 'A' and 'B' data lines (4, 5) as simultaneous packets with an interval of a duration at least as long as a packet between adjacent packets. The 'A' and 'B' data lines (4, 5) respectively carry packets from respective 'A' and 'B' sub-multiplexes or subframes. A number of service recovery devices (6, 7, 8) are coupled to both the data lines (4, 5) for recovering service information from appropriately addressed 'BC' packets containing service information When a 'BI' packet containing service interpretation appears on a data line the service recovery device with the corresponding address produces an output BID which causes the (BI' packet (which is still in the RAM (3)) to load the 'BI' packet into a processor memory (14) during the interval following its appearance. A microcomputer (9) uses this stored information to control the service recovery devices.

./...

Fig.1.

"HANDLING DATA PACKETS"

The present invention relates to a method of handling packets of data in which the packets are of a first or of a second type where the packets of the first type convey service information whilst packets of the second type convey service interpretation. The invention also relates to apparatus for carrying out the above method.

The European Broadcasting Union documents "Television Standards for the Broadcasting Satellite Service Specification of the C-MAC/Packet System" - SPB 284, 3rd revised edition, published December 1984 and "Methods of Conveying C-MAC/Packet Signals in Small and Large Community Antenna and Cable Network Installations" - SPB 352, published December, 1984 (both of which are incorporated herein by way of reference in their entirety) describe television systems where the colour and the luminance video information are transmitted as time multiplexed components whilst sound and data information are transmitted in digital form in a part of each line period (data burst) not occupied by video information. The sound and digital information is organised into packets each of which extends over a number of data bursts. The packets are of a number of types, a first of which is referred to as a "BC" packet which conveys service information such as a sound channel whilst a second type which is referred to as a "BI" packet which conveys service interpretation such as the nature of the coding of the information conveyed in the "BC" packets.

It is an object of the invention of provide a method of handling such packets of data.

The present invention provides a method of handling packets of data in which the packets can be of a first or of a second type where packets of the first type convey service information whilst packets of the second type convey service interpretation, characterised in that said packets are read in such manner that an interval is provided between successive packets with each interval being of a duration at least as long as that of a packet, applying said packets when read to one or more service recovery devices for recovering the information for one or more respective services from the packets of the first type, a service interpretation packet corresponding to a particular service being loaded into memory during the interval following the period when said service interpretation packet was read for the control of the service recovery device recovering the information from said particular service.

The method according to the invention has the advantage that it avoids every service interpretation packet being loaded into memory and thus prevents this memory from being overloaded.

Where packets of the first and second type for a given service carry a common packet address whilst packets of said first type carry a first packet type code and packets of said second type carry a second packet type code, the invention may be further characterised in that the packet address for the particular service causes the service recovery device for the particular service to operate on packets carrying that packet address to recover the information from said particular service when said packets are of the first type and to cause the said loading into memory when the packets are of the second type.

This invention also provides apparatus for handling packets of data in which the packets can be of a first or of a second type where packets of the first type convey service information whilst packets of the second type convey service interpretation, characterised in that said apparatus comprises means for reading said packets from a data formatting device in such manner that an interval is provided between successive packets which interval is of a duration at least as long as that of a packet, means for applying said packets when read to one or more service recovery devices for recovering the information for one or more respective services from the packets of the first type, and means for loading a service interpretation packet corresponding to a particular service into a memory device during the interval following the period when said service interpretation packet was read for the control of the service recovery device recovering the information from said particular service.

Where packets of the first and second type for a given service carry a common packet address whilst packets of said first type carry a first packet type code and packets of said second type carry a second packet type code, the apparatus may be further characterised in that the service recovery device comprises means for responding to all packets of a particular service carrying a particular packet address, means for recovering the information from said particular service when said.packets are of the first type and means for causing the said loading into the memory device when the packets are of the second type.

The data formatting device may comprise a random access memory from which said packets are read onto a data line or lines to which said one or more sevice recovery devices are connected, said random access memory being additionally connected to said memory device to which said service interpretation packets are read during said intervals, and a microcomputer connected to said memory device, said microcomputer, in response to the service interpretation packets stored therein, producing service interpretation information for said recovery device or devices.

The above and other features of the invention will be described by way of example with reference to the accompanying drawings, in which:-

Figure 1 is a data handling arrangement according to the invention, and

Figure 2 shows timing diagrams for explaining the operation of the arrangement of Figure 1.

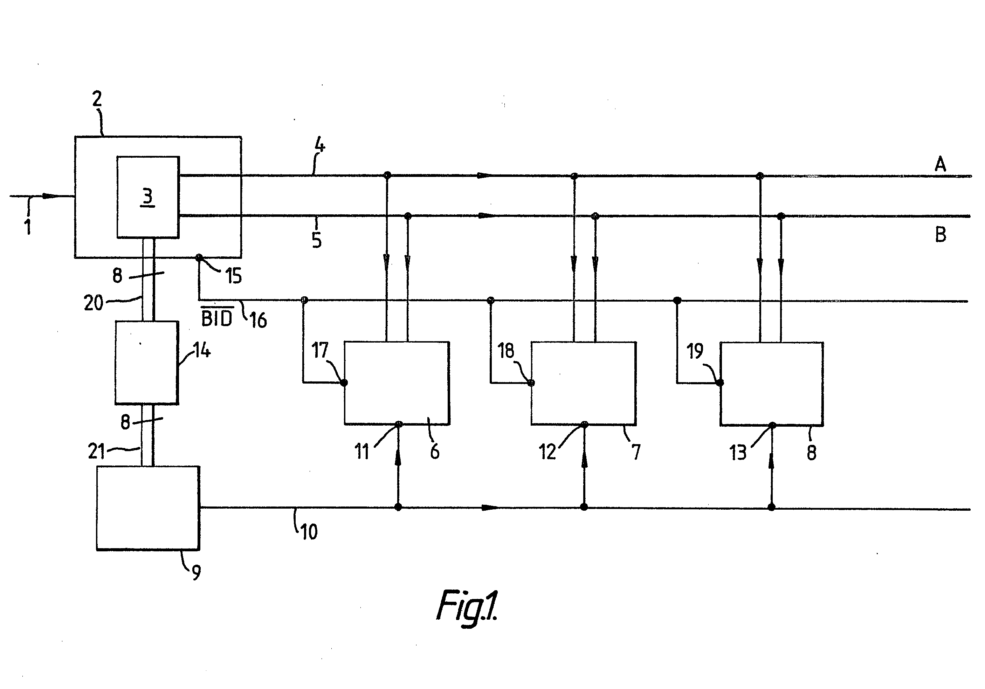

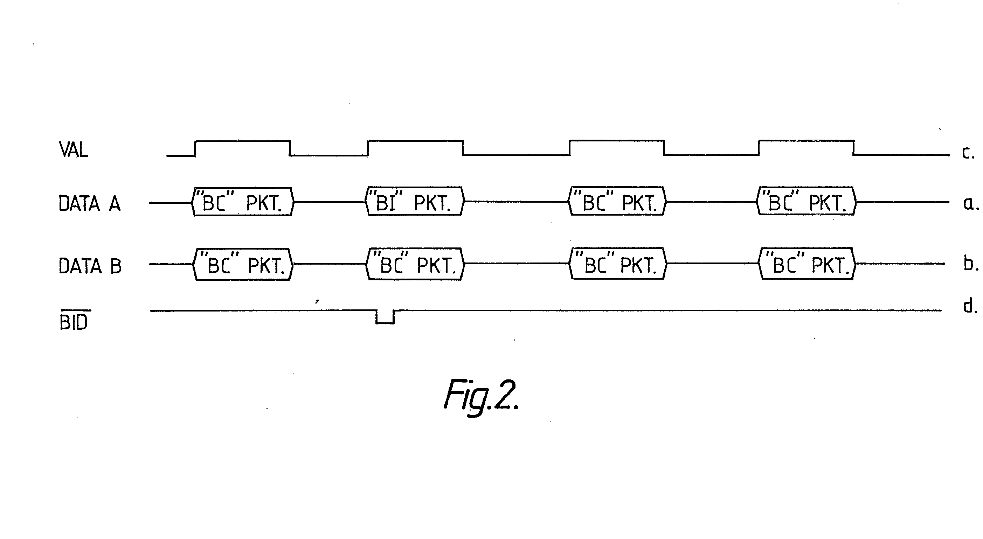

In Figure 1 the digital data in the form as received e.g. in bursts and if for the C-MAC or D-MAC systems may be in two sub-multiplexes, is conveyed in serial form over a line 1 to a data formatting device 2 in which the data bursts are taken and formed into serial packet data. These packets are derived from a de-interleaving random access memory (RAM) 3 contained in the device 2 in which the data is organised and applied over 'A' and 'B' serial data lines 4 and 5 respectively for the data from the 'A' and 'B' sub-multiplexes. The packets on the outputs 4 and 5 are read out simultaneously at a data rate which is at least twice that of the data contained in the data burst with an interval between successive packets which is at least equal to the length of a packet as shown in Figures 2a and 2b (DATA A and DATA B). In practice for a system as proposed in the above referred to EBU documents the data in each sub-multiplex will have a data rate of 1.53955 M bits/second whilst it can conveniently be read out at a rate of 3.375 M bits/second at the outputs 4 and 5 which rate is one sixth of the sampling frequency of 20.25 MHz for the C-MAC system. With such a rate the intervals are on average just under 900 bit periods at the read out rate whilst each packet occupies 751 bits. Three service recovery devices 6, 7 and 8 are each connected to the two data lines 4 and 5 which are provided to recover the information contained in the 'BC' packets of the data.

Each service recovery device 6, 7, 8 is programmed with a respective packet address corresponding to the services selected by the user and the set management software would, of course, render this process transparent. These packet addresses are obtained from a microcomputer 9 by the software interpretation of packet '0' information. This programming is performed via an $I^2C$ bus 10, together with any interpretation controls necessary to ensure correct service decoding (e.g. in the case of packet digital sound recovery devices PDSR, information about sound coding scheme, mono/stereo) which is connected to respective inputs 11, 12 and 13 of the service recovery devices 6, 7 and 8.

The service recovery devices 6, 7 and 8 compare the address of each 'BC' and 'BI' packet on the data lines 4 and 5 with their pre-programmed value, accepting for processing only those packets where the addresses agree. It is important to note that packet addresses on both data lines 4 and 5 are monitored simultaneously by all recovery devices which means that a packet from a specific service can be accepted from the corresponding packet position in either subframe (sub-multiplex) of a C-MAC or D-MAC signal. (It should be noted that the specifications set out in the above mentioned documents SPB 284 and SPB 352 do not allow packets conveying the same service component to occur in corresponding positions in each subframe.) This feature allows broadcasters almost transparent use of the total multiplex capacity of a C-MAC and D-MAC signal, despite its physical organisation as two data subframes.

The packet bus signals (conceptionally, at least) shown in Figures 2a and 2b cover a timescale of about 3 or 4 packets. DATA A and DATA B are the respective data lines 4 and 5 carrying packets from each subframe, correponding packet positions appearing simultaneously on the data lines. Only the DATA A line 4, say, would be valid with a D2-MAC input. A mid-value is used here to denote non-valid data and as can be seen, the signal VAL in Figure 2c brackets the packets. The intervals between packets, where VAL is low, can also be clearly seen.

Generally, the MAC packet multiplex will contain a number of 'BI' interpretation packets, carrying information about how the service packets themselves should be interpreted. For example, in the digital sound system as specified, service component packets on a specific address can be divided into two types, according to their 'PT' (packet type) byte. 'BC' packets carry the actual sound samples themselves, while 'BI' packets carry information about coding scheme, sampling rate, mono or stereo, and so on. Only the relevant 'BC' packets are actually required by the recovery devices 6, 7 and 8 whilst the 'BI' packets are required by the microcomputer 9. However, rather than overload the processor by passing every 'BI' packet to a processor memory 14, the present invention permits only relevant 'BI' packets to be stored in the memory 14. The data formatting device 2 has an input 15 connected to a line 16 denoted $\overline{BID}$ (active low 'BI' packet detected) which is connected to respective $\overline{BID}$ outputs 17, 18 and 19 of the service recovery devices 6, 7 and 8. Whenever one of the service recovery devices 6, 7 or 8 detects a 'BI' packet containing the address for which it has been programmed by way of input 11, 12 or 13, it pulls the $\overline{BID}$ input 15 low as shown in Figure 2d. This in turn causes the data formatting device 2 to request direct access to the memory 14. As shown in Figure 2, the microcomputer 9 then has until the end of transmission of that packet (about 200µs) to free a data bus 20 for use by device 2 for the transfer of the 'BI' packet to the memory 14. During the subsequent interval the 'BI' packet previously transmitted on the data line 4 or 5, which is still retained in the de-interleaving RAM 3, is transferred to the processor memory 14 over the 8 bit data bus 20. The 'BI' packet information now stored in the processor memory 14 can be applied over an 8 bit data bus 21 common with the data bus 20 to the microcomputer 9 to amongst other things produce the required packet interpretation information to be applied via the $I^2C$ bus 10 to the input 11, 12 or 13 of the appropriate service recovery device 6, 7 or 8.

By making the $\overline{BID}$ outputs 17, 18, 19 of the service recovery devices 6, 7, 8 open drain FET's, any number of such service recovery devices connected to the data lines 4 and 5 can be wire-"OR"ed; this maintains the extendability of the system. The mechanism of transferring packets of address '0' to the processor memory 14 is in principle the same, except that the $\overline{BID}$ is (in effect) asserted internally within the data formatting device 2, by the output of a dedicated packet address '0' detection circuit.

CLAIMS:-

1.    A method of handling packets of data in which the packets can be of a first or of a second type where packets of the first type convey service information whilst packets of the second type convey service interpretation, characterised in that said packets are read in such manner that an interval is provided between successive packets with each interval being of a duration at least as long as that of a packet, applying said packets when read to one or more service recovery devices for recovering the information for one or more respective services from the packets of the first type, a service interpretation packet corresponding to a particular service being loaded into memory during the interval following the period when said service interpretation packet was read, for the control of the service recovery device recovering the information from said particular service.

2.    A method as claimed in Claim 1, in which packets of the first and second type for a given service carry a common packet address whilst packets of said first type carry a first packet type code and packets of said second type carry a second packet type code, characterised in that the packet address for the particular service causes the service recovery device for the particular service to operate on packets carrying that packet address to recover the information from said particular service when said packets are of the first type and to cause the said loading into memory when the packets are of the second type.

3.    Apparatus for handling packets of data in which the packets can be of a first or of a second type where packets of the first type convey service information whilst packets of the second type convey service interpretation, characterised in that said apparatus comprises means for reading said packets from a data formatting device in such manner that an interval is provided between successive packets which interval is of a duration at least as long as that of a packet, means for applying said packets when read to one or more service recovery devices for recovering the information for one or more respective services from the packets of the first type, and means for loading a service interpretation packet corresponding to a particular service into a memory device during the interval following the period when said service interpretation packet was read, for the control of the service recovery device recovering the information from said particular service.

4. Apparatus as claimed in Claim 3, where packets of the first and second type for a given service carry a common packet address whilst packets of said first type carry a first packet type code and packets of said second type carry a second packet type code, characterised in that the service recovery device comprises means for responding to all packets of a particular service carrying a particular packet address, means for recovering the information from said particular service when said packets are of the first type and means for causing the said loading into the memory device when the packets are of the second type.

5. Apparatus as claimed in Claim 3 or 4, characterised in that said data formatting device comprises a randon access memory from which said packets are read onto a data line or lines to which said one or more service recovery devices are connected, said random access memory being additionally connected to said memory device to which said service interpretation packets are read during said intervals, and a microcomputer connected to said memory device, said microcomputer, in response to the service interpretation packets stored therein, producing service interpretation information for said recovery device or devices.

---------------

Fig.1.

1-II-PHB 33144

0194720

0194720

VAL

DATA A

DATA B

$\overline{BID}$

"BC" PKT.  "BI" PKT.  "BC" PKT.  "BC" PKT.

"BC" PKT.  "BC" PKT.  "BC" PKT.  "BC" PKT.

c.

a.

b.

d.

*Fig.2.*